# EUROPEAN PATENT SPECIFICATION

(11) **EP 3 971 789 B1**
(45) Date of publication and mention of the grant of the patent: **29.05.2024**
(21) Application number: 21202782.5
(22) Date of filing: 01.04.2016
(51) Int. Cl.: G06N 3/063, G06N 3/02, G06N 3/04

(54) **DEVICE AND METHOD FOR EXECUTING FORWARD CALCULATION OF ARTIFICIAL NEURAL NETWORK**
VORRICHTUNG UND VERFAHREN ZUR DURCHFÜHRUNG EINER VORWÄRTSBERECHNUNG EINES KÜNSTLICHEN NEURONALEN NETZWERKS
DISPOSITIF ET PROCÉDÉ PERMETTANT D'EXÉCUTER UN CALCUL DEPUIS L'ORIGINE D'UN RÉSEAU DE NEURONES ARTIFICIELS

(30) Priority: 20.01.2016 CN 201610037645
(43) Date of publication of application: 23.03.2022
(62) Divisional of application: 16885906.4
(73) Proprietor: Cambricon Technologies Corporation Limited, Beijing 100191 (CN)
(72) Inventor: LIU, Shaoli, Beijing, 100190 (CN); GUO, Qi, Beijing, 100190 (CN); CHEN, Yunji, Beijing, 100190 (CN); CHEN, Tianshi, Beijing, 100190 (CN)
(74) Representative: Huang, Liwei

(56) References cited:
- HAMALAINEN T ET AL: "TUTNC: a general purpose parallel computer for neural network computations", MICROPROCESSORS AND MICROSYSTEMS, IPC BUSINESS PRESS LTD. LONDON, GB, vol. 19, no. 8, 1 October 1995 (1995-10-01), pages 447-465, XP004032581, ISSN: 0141-9331, DOI: 10.1016/0141-9331(96)82010-2
- Philipp Ff: "Quicknet on MultiSpert: Fast Parallel Neural Network Training", , 1 December 1997 (1997-12-01), XP055609263, Retrieved from the Internet: URL:https://pdfs.semanticscholar.org/1370/ 28d000afc312acd3128e603a24bfe0f872bf.pdf

## Description

### Technical Field

The present disclosure is generally directed to the technical field of artificial neural network, and in particularly to an apparatus and method for performing a forward computation of artificial neural networks.

### Background Art

Multi-layer artificial neural networks are widely used in fields like pattern recognition, image processing, function approximation and optimized computation etc. The multilayer artificial neural networks attract more and more attention from the academic and industrial fields due to its higher recognition accuracy and better parallelism.

A known method for supporting the forward computation of multi-layer artificial neural networks is to use a general-purpose processor. This method executes general purpose instructions by using a general-purpose register file and general purpose functional components to support the forward computation. One of the disadvantages of this method is that the low operation performance of a single general-purpose processor cannot meet the needs for the operation performance of the general multilayer artificial neural networks. When a plurality of general purpose processors execute in parallel, the intercommunication between the general-purpose processors becomes a bottleneck of performance. In addition, the general-purpose processors need to decode the forward computation of multilayer artificial neural networks into a long queue of operations and access instructions, this front-end decoding on processors causes relatively high-power consumption.

Another known method for supporting a forward computation of multilayer artificial neural networks is to use a graphics processing unit (GPU). This method executes general purpose SIMD (single instruction multiple data) instructions by using a general-purpose register file and general-purpose stream processing units to support the forward computation. Since GPU is a device specifically for executing graphics and image operations and scientific computation without support for multilayer artificial neural network operations, and thus a great amount front-end decoding is still required to perform the operation of multilayer artificial neural networks, which causes large additional overhead. Besides, since GPU only contains a small on-chip cache, model data (weights) of multilayer artificial neural networks need to be loaded repeatedly from off-chip memory, and off-chip bandwidth becomes the main bottleneck for its performance and causes huge power consumption overhead as well.

Hamalainen T. et al: "TUTNC: a general purpose parallel computer for neural network computations", (MICROPROCESSORS AND MICROSYSTEMS, IPC BUSINESS PRESS LTD. LONDON GB vol. 19, no. 8, 1 October 1995 (1995-10-01)) presents the architecture and realization of the TUTNC (Tampere University of Technology Neural Computer) system. TUTNC is designed for parallel computation and it is suitable for several artificial neural network (ANN) algorithms. Processors are connected via a tree shaped communication network, which can be programmed to perform efficient global operations.

### Summary

The invention is set out in the appended claims.

### Brief Description of the Drawings

In order to facilitate a better understanding of the present disclosure and its advantages, the following description is presented with reference to the accompanying figures, wherein,
Fig.1 illustrates a block diagram of an overall structure of the apparatus for performing a forward computation of artificial neural networks according to an example of the present invention.
Fig.2 illustrates a structure of the H tree unit in the apparatus for performing a forward operation of artificial neural networks according to an example of the present invention.
Fig.3 illustrates a block diagram of a structure of the master operation unit in the apparatus for performing a forward computation of artificial neural networks according to an example of the present invention.
Fig.4 is a block diagram of a structure of the slave operation units in the apparatus for performing a forward computation of artificial neural networks according to an example of the present invention.
Fig.5 is a block diagram of the forward computation process of neural networks according to an example of the present invention.
Fig.6 is a flowchart illustrating the operation of single-layer artificial neural network according to an example of the present invention.

In all the accompanying figures, same apparatus, components, units and the like are referenced by same reference numbers.

### Detailed Description

Based on the following detailed description of the exemplary embodiments of the present invention with reference to the drawings, other aspects, merits and outstanding features of the present invention will become apparent to those skilled in the art.

In the present invention, the term "comprising" and "including" as well as their derivatives mean to contain rather than limit; the term "or" is also inclusive, which means "and/or" .

In this specification, the following various embodiments illustrate principles of the present invention are merely used for explanation purpose, which should not be intepreted by any means to limit the scope of the present invention. The following description with reference to the accompanying drawings is used to comprehend the exemplary embodiments of the present invention defined by the claims. The following description includes multiple details in order to be helpful for understanding. However, these details should be considered as merely for illustrative purpose. Therefore, a person skilled in the art can make various changes and modifications to the embodiments illustrated in this description. In addition, for clear and concise purpose, descriptions of those commonly known functions and structures are omitted. Besides, same reference numbers refer to same function and operation throughout the accompanying drawings.

The forward computation of multilayer artificial neural networks according to embodiments of the present disclosure comprises two or more layers having multiple neurons. For each layer, a dot product operation is performed on an input neuron vector and a weight vector to obtain a result fistly, and then an activation operation is performed on the result to obtain an output neuron, wherein the activation function for performing the activation operation may be sigmoid function, tanh function, relu function and softmax function etc.

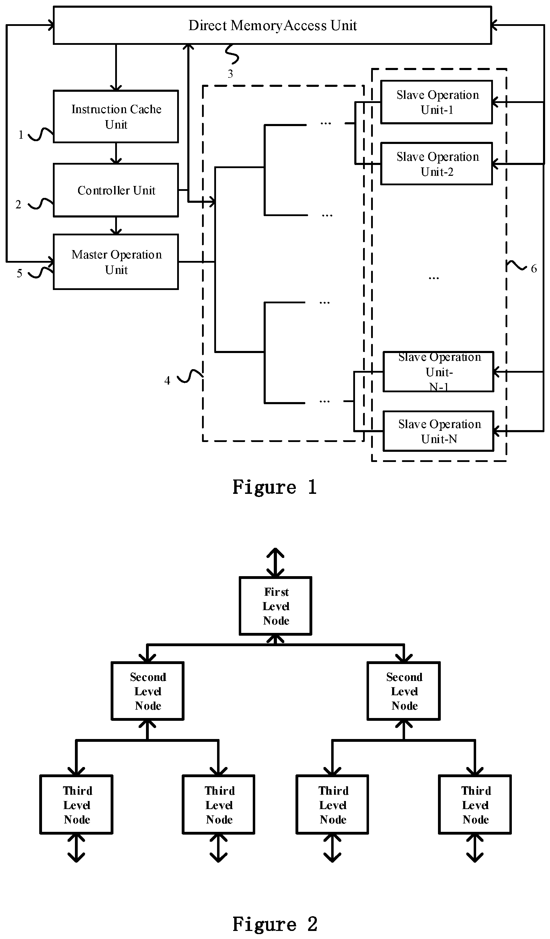

Fig. 1 is an illustrative block diagram of the overall structure of the apparatus for performing a forward computation of artificial neural networks according to one embodiment of the present invention. As shown in Fig. 1, the apparatus comprises an instruction cache unit 1, a controller unit 2, a direct memory access unit 3, an H tree unit 4, a master operation unit 5 and multiple slave operation units 6. The instruction cache unit 1, the controller unit 2, the direct memory access unit 3, the H tree unit 4, the master operation unit 5 and the slave operation units 6 all may be hardware circuits (for example, an application-specific integrated circuit (ASIC)).

The instruction cache unit 1 is configured to read instructions and cache the instructions via the direct memory access unit 3.

The controller unit 2 is configured to read instructions from the instruction cache unit 1, and decode the instructions into micro instructions for controlling operations of other modules; for example, the other modules may include the direct memory access unit 3, the master operation unit 5 and the slave operation units 6 etc.

The direct memory access unit 3 is configured to access an external address space, directly read data from respective cache units or write data into respective cache units within the apparatus to load or store data.

Fig.2 illustrates the structure of the H tree unit 4. The H tree unit 4 acts as a data path between the master operation unit 5 and the multiple slave operation units 6 and has an H tree structure. The H tree is a binary tree path composed of multiple nodes, each node may transmit the data from upstream node to two downstream nodes, combine data returned by the two downstream nodes and then transmit the combined data back to the upstream node. For example, in the initial computing stage of artificial neural networks in each layer, the neuron data in the master computation module 5 are transmitted to respective slave operation units 6 via the H tree unit 4; when the slave operation units 6 completes the computation, the values of output neuron output by each slave operation unit may be spliced into a complete vector stage-by-stage in the H tree unit, the complete vector may be an intermediate result vector comprising multiple output neurons. Taking a full connection layer of the neural network as an example, if the apparatus includes N slave operation units, the intermediate result vector is patitioned into N segments, each segment contains N elements, and the i^{th} slave operation unit is configured to compute the i^{th} element in each segment. The N elements are spliced into a vector with the length of N in the H tree unit, and the vector is returned back to the master operation unit via the H tree unit. Therefore, if there are only N output neurons in the network, then each slave operation unit is merely configured to output the value of a single neuron. If the number of output neurons in the network is m*N, each slave operation unit is configured to output the values of m neurons.

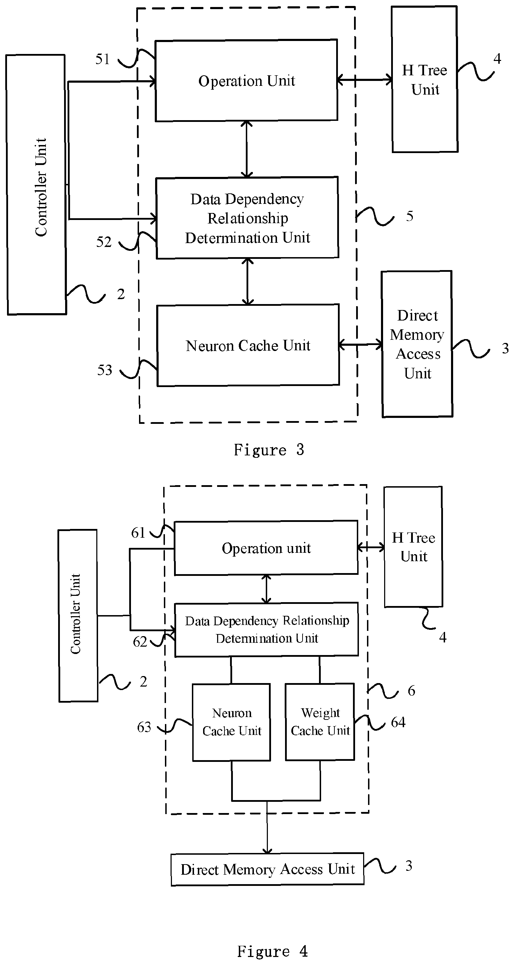

Fig.3 is an illustrative block diagram of the structure of the master operation unit 5 in the apparatus for performing the forward computation of artificial neural networks according to one embodiment of the present invention. As shown in Fig. 3, the master operation unit 5 includes an operation unit 51, a data dependency relationship determination unit 52 and a neuron cache unit 53.

The neuron cache unit 53 is configured to cache the input data used in the computing process and output data of the master operation unit 5. The operation unit 51 is configured to implement various operation functionality of the master operation unit 5. The data dependency relationship determination unit 52 is a port for the operation unit 51 to read or write the neuron cache unit 53, and the data dependency determination unit 52 may ensure that there is no consistency conflict in reading data from or writing data to neuron cache unit. Meanwhile, the data dependency relationship determination unit 52 may also transmit the read data to the slave operation units via the H tree unit 4, and the output data of the slave operation units 6 are directly transmitted to the operation unit 51 via the H tree unit 4. The instructions output by the controller unit 2 are transmitted to the operation unit 51 and the data dependency relationship determination unit 52 so as to control their operations.

Fig. 4 is an illustrative block diagram of the structure of the slave operation units 6 in the apparatus for performing the forward computation of artificial neural networks according to one embodiment of the present invention. As shown in Fig. 4, each slave operation unit 6 includes an operation unit 61, a data dependency relationship determination unit 62, a neuron cache unit 63 and a weight cache unit 64.

The operation unit 61 receives micro instructions transmitted from the controller unit 2 and performs arithmetic logical operations.

The data dependency relationship determination unit 62 is configured to read data from or write data to the neuron cache unit in the computing process. The data dependency relationship determination unit 62 may ensure that there is no consistency conflict between the data related to the read instructions and data related to the write instructions before performing the read or write operation. For example, all micro instructions transmitted to the data dependency relationship determination unit 62 may be stored in an instruction queue within the data dependency relationship determination unit 62. In this instruction queue, if the address range of read data indicated by the read instruction is in conflict with address range of write data indicated by the write instruction in the front position of the instruction queue, then the read instruction can be executed after the write instruction depended by the read instruction has been executed.

The neuron cache unit 63 is configured to cache the input neuron vector data and output neuron value data of the slave operation units 6.

The weight cache unit 64 is configured to cache the weight data needed by the slave operation units 6 in the computing process. Each slave operation unit 6 only stores a part of the weights between all the input neurons and a part of the output neurons. Taking the full connection layer for example, the output neurons are segmented according to the number N of slave operation units, the weight corresponding to the n^{th} output neuron in each segment is stored in the n^{th} slave operation unit.

The slave operation units 6 implement the first half of the forward computation process of artificial neural networks of each layer in parallel. Taking a full connection layer of artificial neural network (e.g., MLP) as an example, the computing process may be represented by the equation: y=f(wx+b), wherein the multiplication between the weight matrix w and the input neuron vector x can be divided into unrelated parallel computing subtasks, "output neuron" and "input neuron" are column vectors, and each slave operation unit 6 may merely conduct a multiplication on the corresponding partial scalar elements in the input neuron and a corresponding column in the weight matrix w to obtain output vector, each output vector is a partial sum of the final result to be accumulated. These partial sums are added to another in the H tree unit 4 stage-by-stage to obtain the final result. Therefore, the computing process becomes a process of calculating the partial sums in parallel and a latter process of accumulation. Each slave operation unit 6 may calculate the values of output neuron, and all the values of output neuron are spliced together into an intermediate result vector in the H tree unit 4. Each slave operation unit 6 only needs to calculate values of output neuron among the intermediate result vector y corresponding to the slave operation unit. The H tree unit 4 sums the values of output neurons by all the slave operation units 6 to obtain the intermediate result vector y. The master operation unit 5 performs the subsequent operations based on the intermediate result vector y, such as adding bias, pooling (for example the max-pooling (MAXPOOLING)) or average pooling (AVGPOOLING)), activating and sampling etc.

According to an embodiment of the present invention, the aforementioned device is provided to execute an instruction set for performing the forward computation of artificial neural networks. The instruction set includes a CONFIG instruction, a COMPUTE instruction, an IO instruction, a NOP instruction, a JUMP instruction and a MOVE instruction.

The CONFIG instruction may be used to configure various constants required in the operation of current layer before the computation of artificial neural networks of each layer begins.

The COMPUTE instruction is configured to perform the arithmetic logical calculation of artificial neural networks of each laye.

The IO instruction is configured to read input data required by the computation from an external address space and store the data back to an external address space after the computation is completed.

The NOP instruction is configured to empty the micro instructions currently loaded in all the internal cache queue for micro instructions to ensure that all instructions before the NOP instruction are all executed. The NOP instruction itself does not include any operation.

The JUMP instruction is configured to control a jump of the next instruction address to be read by the controller from the instruction cache unit, in order to implement a jump of the control flow.

The MOVE instruction is configured to move data at a certain address in an internal address space of the apparatus to another address of the internal address space of the apparatus. This process is independent from the operation unit and does not occupy resources of the operation unit during executed.

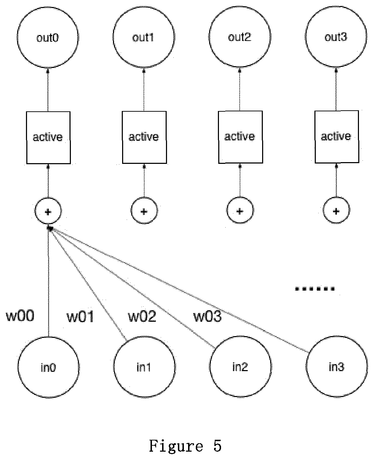

Fig. 5 is an illustrative block diagram of the forward computation process of artificial neural networks according to embodiments of the present invention. In different slave operation units 6, a dot product operation is performed on the input neuron vector and the weight vectors prestored in the slave operation unit 6 respectively to obtain the corresponding values of output neuron. All these values of output neuron may splice an intermediate result vector. The final output neuron vector of neural network of current layer is obtained after an operation of adding a bias vector and an activation operation is performed on the intermediate result vector, the process may be respresented as formula: out=f (w*in+b), wherein "out" refers to an output neuron vector, "in" refers to an input neuron vector, b refers to a bias vector, "w" refers to a weight matrix, and f refers to an activation function. The weight vector prestored in each slave operation unit 6 is a column vector in the weight matrix corresponding to said slave operation unit 6. The H tree unit transmits the input neuron vector [in0,...,inN] to all the slave operation units and the input neuron vector is cached in the neuron cache unit of corresponding slave operation unit 6. The i^{th} slave operation unit is configured to perform a dot product operation on corresponding weight vector [w_i0,...,w_iN] therein and the input neuron vector. The results output by the slave operation units are spliced into a complete output vector via the H tree unit and the output vector may be returned back to the master operation unit. The master operation unit is configured to perform an activation operation to obtain the final output neuron vectors [out0,out1,out2,...,outN].

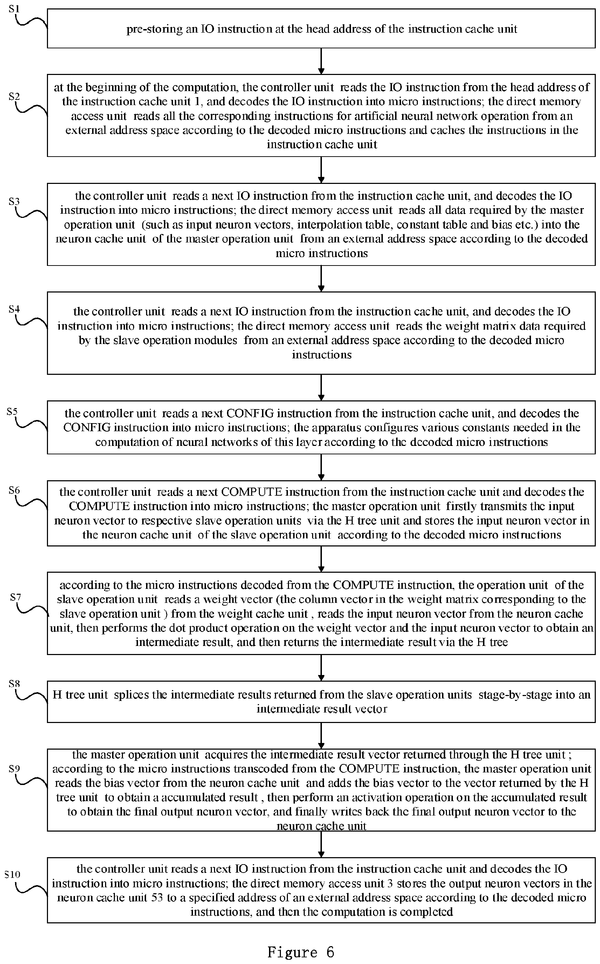

Fig. 6 is a flowchart of the forward computation process of a single layer artificial neural network. This flowchart describes the forward computation process of a single-layer neural network implemented by the apparatus and the instruction set of the present invention.

In step S1, pre-storing an IO instruction at the head address of the instruction cache unit 1.

In step S2, at the beginning of the computation, the controller unit 2 reads the IO instruction from the head address of the instruction cache unit 1, and decodes the IO instruction into micro instructions; the direct memory access unit 3 reads all the corresponding instructions for artificial neural network operation from an external address space according to the decoded micro instructions and caches the instructions in the instruction cache unit 1.

In step S3, the controller unit 2 reads a next IO instruction from the instruction cache unit, and decodes the IO instruction into micro instructions; the direct memory access unit 3 reads all data required by the master operation unit 5 (such as input neuron vectors, interpolation table, constant table and bias etc.) into the neuron cache unit 53 of the master operation unit 5 from an external address space according to the decoded micro instructions.

In step S4, the controller unit 2 reads a next IO instruction from the instruction cache unit, and decodes the IO instruction into micro instructions; the direct memory access unit 3 reads the weight matrix data required by the slave operation modules 6 from an external address space according to the decoded micro instructions.

In step S5, the controller unit 2 reads a next CONFIG instruction from the instruction cache unit, and decodes the CONFIG instruction into micro instructions; the apparatus configures various constants needed in the computation of neural networks of this layer according to the decoded micro instructions. For example, the operation units 51, 61 configure the values of the internal registers respectively according to the parameters in the micro instructions, the parameters, for example, include data of calculation accuracy configuration and data corresponding to activation function (for instance, the accuracy bit of calculation of current layer, the rang parameter of Lrn layer algorithm, the reciprocal of the window size of the AveragePooling layer algorithm) of current layer.

In step S6, the controller unit 2 reads a next COMPUTE instruction from the instruction cache unit and decodes the COMPUTE instruction into micro instructions; the master operation unit 5 firstly transmits the input neuron vector to respective slave operation units 6 via the H tree unit and stores the input neuron vector in the neuron cache unit 63 of the slave operation unit 6 according to the decoded micro instructions.

In Step S7, according to the micro instructions decoded from the COMPUTE instruction, the operation unit 61 of the slave operation unit 6 reads a weight vector (the column vector in the weight matrix corresponding to the slave operation unit 6) from the weight cache unit 64, reads the input neuron vector from the neuron cache unit, then performs the dot product operation on the weight vector and the input neuron vector to obtain an intermediate result, and then returns the intermediate result via the H tree.

In step S8, the H tree unit 4 splices the intermediate results returned from the slave operation units 6 stage-by-stage into an intermediate result vector.

In step S9, the master operation unit 5 acquires the intermediate result vector returned through the H tree unit 4; according to the micro instructions transcoded from the COMPUTE instruction, the master operation unit 5 reads the bias vector from the neuron cache unit 53 and adds the bias vector to the vector returned by the H tree unit 4 to obtain a accumulated result , then perform an activation operation on the accumulated result to obtain the final output neuron vector, and finally writes back the final output neuron vector to the neuron cache unit 53.

In step S10, the controller unit reads a next IO instruction from the instruction cache unit and decodes the IO instruction into micro instructions; the direct memory access unit 3 stores the output neuron vectors in the neuron cache unit 53 to a specified address of an external address space according to the decoded micro instructions, and then the computation is completed.

The implementation of a multilayer artificial neural network is similar to the implementation of a single-layer neural network. After the execution of the artificial neural network of the previous layer is completed, the operation instruction of the next layer may take the output neuron address of the previous layer stored in the master operation unit as the input neuron address of current layer. Similarly, the weight address and bias address in the instruction may also be changed to the addresses corresponding to the current layer.

By adopting the apparatus and instruction set for performing the forward computation of artificial neural networks, lower performance and higher overhead of front-end decoding caused by of CPU and GPU can be solved, which effectively improves the support to forward computations of multilayer artificial neural networks.

In addition, by thoroughly exploring the reusability of input neurons and weight data and adopting specific on-chip caches for the forward computation of multi-layer artificial neural network, the present invention avoids the repeatedly reading of data from memory. Therefore, the memory access bandwidth can be reduced and the problem that memory bandwidth becomes a bottleneck for performance of the forward computation of multi-layer artificial neural networks can be avoided.

The process or method as depicted in the foregoing drawings may be executed through processing logics including hardware (e.g. circuit, special logic, etc.), firmware, software (e.g. a software embodied in a non-transient computer readable medium), or combination of each two. Although the above describes the process or method in light of certain sequential operation, it should be understood that certain operation described herein may be executed in different orders. Additionally, some operations may be executed concurrently rather than sequentially.

In the above of the specification, embodiments of the present invention are expounded with reference to specific exemplary embodiments thereof. A person skilled in the art can make various changes to or modify the present invention . Correspondingly, the specification and accompanying drawings should be deemed as illustrative, rather than restrictive.

Not in accordance with the claims, we provide an apparatus for performing forward computation of an artificial neural network, the apparatus comprising an instruction cache unit, a controller unit, a direct memory access unit, an H tree unit, a master operation unit, and multiple slave operation units, wherein,
the instruction cache unit is configured to read instructions via the direct memory access unit and cache the instructions being read;
the controller unit is configured to read instructions from the instruction cache unit, and decode the instructions into micro instructions for controlling the operation of the H tree unit, the master operation unit and the slave operation units;
the direct memory access unit is configured to write data into corresponding data cache units of the master operation unit and the each slave operation units from an external address space or read data from the data cache units to the external address space;
in the initial computing stage of the forward computation of neural networks of each layer, the master operation unit transmits an input neuron vector of current layer to all the slave operation units via the H tree unit, and after the computation of each slave operation unit is completed, the H tree unit is configured to combine the respective values of output neuron output by the slave operation units into an intermediate result vector stage-by-stage; and
the master operation unit is configured to complete subsequent computations by using the intermediate result vector.

In the aforementioned apparatus, the multiple slave operation units compute respective values of output neuron in parallel by using same input neuron vector and respectively different weight vectors.

In the aforementioned apparatus, wherein the master operation unit is configured to perform any one of the following operations on the intermediate result vector:
a bias-adding operation for adding a bias to the intermediate result vector;
an activation operation for activating the intermediate result vector by an activation function, wherein the activation function is any one of *sigmoid, tanh, relu,* or *softmax*;
a sampling operation for comparing the intermediate result vector with a random number to output a result, if the intermediate result vector is greater than the random number, 1 is output, and if the intermediate result vector is less than the random number, 0 is output;
a pooling operation including a max-pooling or an average pooling (AVGPOOLING).

In the aforementioned apparatus, wherein the slave operation units comprise an input neuron cache unit configured to cache an input neuron data.

In the aforementioned apparatus, wherein the H tree unit acts as a data path between the master operation unit and the multiple slave operation units, and the H tree unit has a structure of H tree, the H tree is a binary tree path including multiple nodes, each node is configured to transmit the data from upstream node to two downstream nodes, combine data returned by the two downstream nodes and then transmit the combined data back to the upstream node.

In the aforementioned apparatus, wherein the master operation unit comprises an operation unit, a data dependency relationship determination unit and a neuron cache unit,
the neuron cache unit is configured to cache input data used by the master operation unit during the computing process and output data output by the master operation unit;
the operation unit conducts various operation functionality of the master operation unit;
the data dependency relationship determination unit is a port to read from the neuron cache unit or write data to the neuron cache unit and configured to ensure that there is no consistency conflict in reading from the neuron cache unit or writing data to the neuron cache unit, and the data dependency relationship determination unit is also configured to read input neuron data from the neuron cache unit, and then transmit the input neuron vector read to the slave operation units via the H tree unit; and
the operation unit is also configured to acquire the intermediate result vector transmitted from the H tree unit.

In the aforementioned apparatus, wherein each slave operation unit comprises an operation unit, a data dependency relationship determination unit, a neuron cache unit and a weight cache unit, wherein,
the operation unit is configured to perform arithmetic logical operations according to the micro instructions received from the controller unit;
the data dependency relationship determination unit is configured to read or write the neuron cache unit and the weight cache unit during the computing process, and ensure that there is no consistency conflict in the reading the neuron cache unit and the weight cache unit, and writing the neuron cache unit and the weight cache unit;
the neuron cache unit is configured to cache the input neuron vector and values of output neuron obtained by the slave operation units; and
the weight cache unit is configured to cache the weight vector required by the slave operation units during the computing process.

In the aforementioned apparatus, in order to ensure there is no consistency conflict in the reading data from or writing data to the cache units, the the data dependency relationship determination unit is configured to determine whether data related to a micro instruction to be executed is depended on data related to a mirco instruction being executed, if data related to a micro instruction to be executed is not depended on data related to a mirco instruction being executed, issuing the micro instruction to be executed immediately, if data related to a micro instruction to be executed is depended on data related to a mirco instruction being executed, the micro instruction to be executed is issued after all micro instructions depended by the micro instruction to be executed are completed.

Not in accordance with the claims, we provide a method for performing forward computation of a single-layer artificial neural network implemented the apparatus, the method comprising:
reading, by the direct memory access unit, all the artificial neural network operation instructions relevant with the forward computation of the artificial neural network of current layer from an external address space, and caches the instructions in the instruction cache unit;
reading, by the direct memory access unit, all data required by the master operation unit into the neuron cache unit of the master operation unit from the external address space, wherein the data is relevant with the forward computation of the artificial neural network of current layer;
reading, by the direct memory access unit, the weight matrix data required by the slave operation units from the external address space;
configuring, by the apparatus, various constants needed in the forward computation of neural networks of current layer;
transmitting, by the master operation unit, the input neuron vector to respective slave operation units via the H tree unit, and storing the input neuron vector in the neuron cache unit of each slave operation units;
reading, by the operation unit of the slave operation unit, a weight vector from the weight cache unit of the slave operation unit, reading the input neuron vector from the neuron cache unit of the slave operation unit, and performing a dot product operation on the weight vector and the input neuron vector to obtain a value of the output neuron, and then returning a value of the output neuron to the master operation unit via the H tree unit;
splicing, by the H tree unit, the values of the output neuron returned from the respective slave operation units stage-by-stage into a complete intermediate result vector;
reading, by the master operation unit, a bias vector from the neuron cache unit of the master operation unit, and adding the bias vector to the intermediate result vector returned from the H tree unit to obtain an accumulated result, then performing an activation operation onf the accumulated result to obtain an output neuron vector, and then writing the output neuron vector back to the neuron cache unit of the master operation unit; and
storing, by the direct memory access unit, the output neuron vector in the neuron cache unit of the master operation unit to a specific address of the external address space.

Not in accordance with the claims, we provide a method of performing a forward computation of a multilayer artificial neural network, the method comprising:
performing the above method for performing forward computation of a single-layer artificial neural network on each layer, wherein
after a previous layer of the artificial neural network has been performed, taking an address of the output neuron in the previous layer stored in a master operation unit as an address of an input neuron in the current layer, and then performing the method for performing forward computation of a single-layer artificial neural network on current layer.

## Claims

1. An apparatus for performing forward computation of an artificial neural network, the apparatus comprising a master operation unit (5), one or more slave operation units (6), and a H tree unit (4) between the master operation unit (5) and the slave operation units (6), wherein,
the master operation unit (5) is configured to transmit an input neuron vector of a layer in the artificial neural network to each slave operation unit (6);
the H tree unit (4) is configured to route the input neuron vector stored in the master operation unit (5) to each slave operation unit (6) at the beginning stage of the current layer of artificial neural network;
the multiple slave operation units (6) are configured to perform a dot product operation in parallel on the input neuron vector transmitted from the master operation unit (5) and different weight vectors of corresponding slave operation unit (6) respectively to obtain intermediate results, and then return the intermediate results to the master operation unit (5);
**characterized in that**
the master operation unit (5) is further configured to cache the input neuron vector into a cache of each slave operation unit (6),
the H tree unit (4) is configured to splice the intermediate results of each slave operation unit (6) into a complete intermediate result vector; and
the master operation unit (5) is also configured to perform an activation operation on the intermediate result vector to obtain a final output neuron vector;
the apparatus further comprises
a direct memory access unit (3) configured to write data into corresponding cache units of the master operation unit (5) and the respective slave operation units (6) from an external address space or read data from the cache units to the external address space;
an instruction cache unit (1) configured to read instructions via the direct memory access unit (3) and cache the instructions; and
a controller unit (2) configured to read instructions from the instruction cache unit (1), decode the instructions into micro instructions for controlling the master operation unit (5) , the slave operation units (6) and the direct memory access unit (3).

2. The apparatus of claim 1, **characterized in that**,
the H tree unit (4) has a structure of H tree, the H tree is a binary path composed of multiple nodes, and
each node is configured to transmit same data from an upstream node to two downstream nodes, combine data returned from two downstream nodes to obtain a combined data, and then transmit the combined data to the upstream node.

3. The apparatus of claim 1, **characterized in that**, the master operation unit (5) is also configured to perform any of the following operations on the intermediate result vector:
an accumulation operation for adding a bias to the intermediate result vector; and
a sampling operation for comparing the intermediate result vector and a random number; and 1 is output when the intermediate result vector is greater than the random number, 0 is output when the intermediate result vector is less than the random number; and
a pooling operation comprising a max pooling or an average pooling.

4. The apparatus of any one of claims 1-3, **characterized in that**, the master operation unit (5) comprises an operation unit (51) and a neuron cache unit (53), wherein,
the neuron cache unit (53) is configured to cache input neuron vector required by the master operation unit (5) and output neuron vector during the computing process; and
the operation unit (51) is configured to perform various operations of the master operation unit (5) , including but not limited to an accumulated operation for adding bias, an activation operation, a pooling operation, an average operation and a sampling operation.

5. The apparatus of claim 4, **characterized in that**, the master operation unit (5) also comprises a data dependency relationship determination unit (52);
the data dependency relationship determination unit (52) is a port for reading from or writing data to the neuron cache unit (53) and configured to ensure that there is no consistency conflict in the reading from the neuron cache unit (53) and writing data to the neuron cache unit (53); and
the data dependency relationship determination unit (52) is also configured to read the input neuron vector from the neuron cache unit (53) and transmit the input neuron vector to the slave operation units (6).

6. The apparatus of any one of claims 1-3, **characterized in that**, each slave operation unit (6) comprises an operation unit (61), a neuron cache unit (63) and a weight cache unit (64), wherein
the neuron cache unit (63) is configured to cache the input neuron vector and a value of the output neuron output by the slave operation unit (6);
the weight cache unit (64) is configured to cache the weight vector required by the slave operation unit (6) during the computing process, the weight vector is read from the an external address space via a direct memory access unit (3); the weight cache unit (64) of each slave operation unit (6) is configured to cache different weight vector; and
the operation unit (61) is configured to receive micro instructions issued from a controller unit, and read weight vector from the weight cache unit (64), read input neuron vector from the neuron cache unit (63), and then perform a dot product operation on the weight vector and the input neuron vector according to the micro instructions.

7. The apparatus of claim 6, **characterized in that**, each slave operation unit (6) also comprises a data dependency relationship determination unit (62), wherein
the data dependency relationship determination unit (62) is configured to read data from or write data to the neuron cache unit (63) and the weight cache unit (64) during the computing process, and ensure that there is no consistency conflict in the reading data from the neuron cache unit (63) and the weight cache unit (64) and writing data to the neuron cache unit (63) and the weight cache unit (64).

8. The apparatus of claims 5 or 7, **characterized in that**, the data dependency relationship determination unit (52, 62) is configured to determine whether data related to a micro instruction to be executed is depended on data related to a mirco instruction being executed;
if data related to a micro instruction to be executed is not depended on data related to a mirco instruction being executed, the micro instruction to be executed is issued immediately; and
if data related to a micro instruction to be executed is depended on data related to a mirco instruction being executed, the micro instruction to be executed is issued after all micro instructions depended by the micro instruction to be executed are completed.

9. The apparatus of claim 8, **characterized in that**, the data dependency relationship determination unit (52, 62) is configured to store an instruction queue,
in the instruction queue, if a range of data related to a read instruction is conflict in a range of data related to a write instruction at the front end of the instruction queue, the read instruction is issued after the write instructions that the read instruction depends on is executed.

10. The apparatus of claim 1, **characterized in that**, the instruction comprises one or more of followings:
a CONFIG instruction used for configuring various constants required in an operation of the current layer before the execution of artificial neural networks of each layer begins;
a COMPUTE instruction configured to perform an arithmetic logical calculation of artificial neural networks of each layer;
an IO instruction configured to read input data required by the operation from an external address space and store the data back to the external address space after the operation is completed;
a NOP instruction configured to empty the micro instructions currently loaded in all the internal cache queue for micro instructions to ensure that all instructions before the NOP instruction are all executed;
a JUMP instruction configured to control a jump of the next instruction address to be read by the controller from the instruction cache unit (1), in order to implement a jump of the control flow; and
a MOVE instruction configured to move data at a certain address in an internal address space of the apparatus to another address of the internal address space of the apparatus.

11. The apparatus of any one of claims 1 to 6, **characterized in that**,
the apparatus is configured to perform forward computation of a multilayer artificial neural network, after a previous layer of the artificial neural network has been performed, a output neuron vector of the previous layer is obtained, the master operation unit (5) is configured to take the output neuron vector in the previous layer as an input neuron vector in the current layer for performing operation of artificial neural network on current layer.

12. A method of performing forward computation of an artificial neural network, executed by the apparatus of any of claims 1 to 11, the method comprising:
transmitting, by a master operation unit (5) , an input neuron vector to each slave operation unit (6), stores the input vector into a cache of each slave operation unit (6) respectively;
performing, by a plurality of slave operation units (6), a dot product operation in parallel on the input neuron vector transmitted from the master operation unit (5) and different weight vectors of corresponding slave operation unit (6) respectively to obtain intermediate results, and then return the intermediate results to the master operation unit (5) ;
splicing, by a H tree unit (4), the intermediate results of each slave operation unit (6) into a complete intermediate result vector after the computation of the slave operation unit (6) is completed; and
performing, by the master operation unit (5), an activation operation on the intermediate result vector to obtain a final output neuron vector.

## Patentansprüche

1. Vorrichtung zum Durchführen einer Vorwärtsberechnung eines künstlichen neuronalen Netzes, wobei die Vorrichtung eine Master-Operationseinheit (5), eine oder mehrere Slave-Operationseinheiten (6) und eine H-Baum-Einheit (4) zwischen der Master-Operationseinheit (5) und den Slave-Operationseinheiten (6) umfasst, wobei,
die Master-Operationseinheit (5) dazu konfiguriert ist, einen Eingabeneuronenvektor einer Schicht in dem künstlichen neuronalen Netz an jede Slave-Operationseinheit (6) zu übertragen,
die H-Baum-Einheit (4) dazu konfiguriert ist, den in der Master-Operationseinheit (5) gespeicherten Eingabeneuronenvektor zu jeder Slave-Operationseinheit (6) in der Anfangsphase der aktuellen Schicht des künstlichen neuronalen Netzes weiterzuleiten;
die mehreren Slave-Operationseinheiten (6) dazu konfiguriert sind, parallel eine Skalarproduktoperation an dem von der Master-Operationseinheit (5) übertragenen Eingabeneuronenvektor beziehungsweise unterschiedlichen Gewichtsvektoren der entsprechenden Slave-Operationseinheit (6) durchzuführen, um Zwischenergebnisse zu erhalten, und dann die Zwischenergebnisse an die Master-Operationseinheit (5) zurückzugeben;
**dadurch gekennzeichnet, dass**
die Master-Operationseinheit (5) ferner dazu konfiguriert ist, den Eingabeneuronenvektor in einem Cache jeder Slave-Operationseinheit (6) zu cachen,
die H-Baum-Einheit (4) dazu konfiguriert ist, die Zwischenergebnisse jeder Slave-Operationseinheit (6) zu einem vollständigen Zwischenergebnisvektor zusammenzufügen; und
die Master-Operationseinheit (5) auch dazu konfiguriert ist, eine Aktivierungsoperation an dem Zwischenergebnisvektor durchzuführen, um einen endgültigen Ausgabeneuronenvektor zu erhalten;
wobei die Vorrichtung ferner Folgendes umfasst
eine Direktspeicherzugriffseinheit (3), die dazu konfiguriert ist, Daten aus einem externen Adressraum in entsprechende Cache-Einheiten der Master-Operationseinheit (5) und der jeweiligen Slave-Operationseinheiten (6) zu schreiben oder Daten aus den Cache-Einheiten in den externen Adressraum zu lesen;
eine Anweisungs-Cache-Einheit (1), die dazu konfiguriert ist, Anweisungen über die Direktspeicherzugriffseinheit (3) zu lesen und die Anweisungen zu cachen; und
eine Steuerungseinheit (2), die dazu konfiguriert ist, Anweisungen aus der Anweisungs-Cache-Einheit (1) zu lesen, die Anweisungen in Mikroanweisungen zum Steuern der Master-Operationseinheit (5), der Slave-Operationseinheiten (6) und der Direktspeicherzugriffseinheit (3) zu dekodieren.

2. Vorrichtung nach Anspruch 1, **dadurch gekennzeichnet, dass**
die H-Baum-Einheit (4) eine H-Baum-Struktur aufweist, der H-Baum ein binärer Pfad ist, der aus mehreren Knoten besteht, und
jeder Knoten dazu konfiguriert ist, die gleichen Daten von einem Upstream-Knoten an zwei Downstream-Knoten zu übertragen, die von zwei Downstream-Knoten zurückgegebenen Daten zu kombinieren, um kombinierte Daten zu erhalten, und die kombinierten Daten dann an den Upstream-Knoten zu übertragen.

3. Vorrichtung nach Anspruch 1, **dadurch gekennzeichnet, dass** die Master-Operationseinheit (5) auch dazu konfiguriert ist, beliebige der folgenden Operationen an dem Zwischenergebnisvektor durchzuführen:
eine Akkumulationsoperation zum Hinzufügen eines Bias zu dem Zwischenergebnisvektor; und
eine Abfrageoperation zum Vergleichen des Zwischenergebnisvektors und einer Zufallszahl; und 1 ausgegeben wird, wenn der Zwischenergebnisvektor größer als die Zufallszahl ist, 0 ausgegeben wird, wenn der Zwischenergebnisvektor kleiner als die Zufallszahl ist; und
eine Pooling-Operation, die ein Max-Pooling oder ein Durchschnitts-Pooling umfasst.

4. Vorrichtung nach einem der Ansprüche 1-3, **dadurch gekennzeichnet, dass** die Master-Operationseinheit (5) eine Operationseinheit (51) und eine Neuronen-Cache-Einheit (53) umfasst, wobei
die Neuronen-Cache-Einheit (53) dazu konfiguriert ist, einen durch die Master-Operationseinheit (5) benötigten Eingabeneuronenvektor und einen Ausgabeneuronenvektor während des Rechenvorgangs zu cachen; und
die Operationseinheit (51) dazu konfiguriert ist, verschiedene Operationen der Master-Operationseinheit (5) durchzuführen, einschließlich, aber nicht beschränkt auf, einer akkumulierten Operation zum Hinzufügen eines Bias, einer Aktivierungsoperation, einer Pooling-Operation, einer Durchschnittsoperation und einer Abfrageoperation.

5. Vorrichtung nach Anspruch 4, **dadurch gekennzeichnet, dass** die Master-Operationseinheit (5) auch eine Datenabhängigkeitsbeziehungsbestimmungseinheit (52) umfasst;
die Datenabhängigkeitsbeziehungsbestimmungseinheit (52) ein Port zum Lesen von oder Schreiben von Daten in die Neuronen-Cache-Einheit (53) ist und dazu konfiguriert ist, sicherzustellen, dass beim Lesen von der Neuronen-Cache-Einheit (53) und beim Schreiben von Daten in die Neuronen-Cache-Einheit (53) kein Konsistenzkonflikt besteht; und
die Datenabhängigkeitsbeziehungsbestimmungseinheit (52) auch dazu konfiguriert ist, den Eingabeneuronenvektor von der Neuronen-Cache-Einheit (53) zu lesen und den Eingabeneuronenvektor an die Slave-Operationseinheiten (6) zu übertragen.

6. Vorrichtung nach einem der Ansprüche 1-3, **dadurch gekennzeichnet, dass** jede Slave-Operationseinheit (6) eine Operationseinheit (61), eine Neuronen-Cache-Einheit (63) und eine Gewichtungs-Cache-Einheit (64) umfasst, wobei
die Neuronen-Cache-Einheit (63) dazu konfiguriert ist, den Eingabeneuronenvektor und einen Wert des durch die Slave-Operationseinheit (6) ausgegebenen Ausgabeneurons zu cachen;
die Gewichtungs-Cache-Einheit (64) dazu konfiguriert ist, den durch die Slave-Operationseinheit (6) benötigten Gewichtungsvektor während des Rechenvorgangs zu cachen, der Gewichtungsvektor von einem externen Adressraum über eine Direktspeicherzugriffseinheit (3) gelesen wird; die Gewichtungs-Cache-Einheit (64) jeder Slave-Operationseinheit (6) dazu konfiguriert ist, unterschiedliche Gewichtungsvektoren zu cachen; und
die Operationseinheit (61) dazu konfiguriert ist, von einer Steuerungseinheit ausgesendete Mikroanweisungen zu empfangen und einen Gewichtungsvektor aus der Gewichtungs-Cache-Einheit (64) zu lesen, einen Eingabeneuronenvektor von der Neuronen-Cache-Einheit (63) zu lesen und dann eine Skalarproduktoperation an dem Gewichtsvektor und dem Eingabeneuronenvektor gemäß den Mikroanweisungen durchzuführen.

7. Vorrichtung nach Anspruch 6, **dadurch gekennzeichnet, dass** jede Slave-Operationseinheit (6) auch eine Datenabhängigkeitsbeziehungsbestimmungseinheit (62) umfasst, wobei
die Datenabhängigkeitsbeziehungsbestimmungseinheit (62) dazu konfiguriert ist, während des Rechenvorgangs Daten von der Neuronen-Cache-Einheit (63) und der Gewichtungs-Cache-Einheit (64) zu lesen oder in diese zu schreiben und sicherzustellen, dass beim Lesen von Daten von der Neuronen-Cache-Einheit (63) und der Gewichtungs-Cache-Einheit (64) und Schreiben von Daten in die Neuronen-Cache-Einheit (63) und die Gewichtungs-Cache-Einheit (64) kein Konsistenzkonflikt besteht.

8. Vorrichtung nach Anspruch 5 oder 7, **dadurch gekennzeichnet, dass** die Datenabhängigkeitsbeziehungsbestimmungseinheit (52, 62) dazu konfiguriert ist, zu bestimmen, ob Daten, die sich auf eine auszuführende Mikroanweisung beziehen, von Daten abhängen, die sich auf eine Mikroanweisung, die gerade ausgeführt wird, beziehen;
falls Daten, die sich auf eine auszuführende Mikroanweisung beziehen, nicht von Daten abhängen, die sich auf eine Mikroanweisung, die gerade ausgeführt wird, beziehen, die auszuführende Mikroanweisung sofort ausgesendet wird; und
falls Daten, die sich auf eine auszuführende Mikroanweisung beziehen, von Daten abhängen, die sich auf eine Mikroanweisung, die gerade ausgeführt wird, beziehen, die auszuführende Mikroanweisung ausgesendet wird, nachdem alle Mikroanweisungen, von denen die auszuführende Mikroanweisung abhängt, abgeschlossen sind.

9. Vorrichtung nach Anspruch 8, **dadurch gekennzeichnet, dass** die Datenabhängigkeitsbeziehungsbestimmungseinheit (52, 62) zum Speichern einer Anweisungswarteschlange konfiguriert ist,
falls in der Anweisungswarteschlange ein Datenbereich, der sich auf eine Leseanweisung bezieht, ein Konflikt in einem Datenbereich ist, der sich auf eine Schreibanweisung an dem vorderen Ende der Anweisungswarteschlange bezieht, die Leseanweisung ausgesendet wird, nachdem die Schreibanweisungen, von denen die Leseanweisung abhängt, ausgeführt ist.

10. Vorrichtung nach Anspruch 1, **dadurch gekennzeichnet, dass** die Anweisung eine oder mehrere der Folgenden umfasst:
eine CONFIG-Anweisung, die zum Konfigurieren verschiedener Konstanten verwendet wird, die in einer Operation der aktuellen Schicht benötigt werden, bevor die Ausführung künstlicher neuronaler Netze jeder Schicht beginnt;
eine COMPUTE-Anweisung, die dazu konfiguriert ist, eine arithmetisch-logische Kalkulation künstlicher neuronaler Netze jeder Schicht durchzuführen;
eine IO-Anweisung, die dazu konfiguriert ist, durch die Operation benötigte Eingabedaten von einem externen Adressraum zu lesen und die Daten, nachdem die Operation abgeschlossen ist, wieder in dem externen Adressraum zu speichern;
eine NOP-Anweisung, die dazu konfiguriert ist, die aktuell in der gesamten internen Cache-Warteschlange für Mikroanweisungen geladenen Mikroanweisungen zu leeren, um sicherzustellen, dass alle Anweisungen vor der NOP-Anweisung ausgeführt werden;
eine JUMP-Anweisung, die dazu konfiguriert ist, einen Sprung der nächsten Anweisungsadresse zu steuern, die durch die Steuerung von der Anweisungs-Cache-Einheit (1) zu lesen ist, um einen Sprung des Steuerflusses zu implementieren; und
eine MOVE-Anweisung, die dazu konfiguriert ist, Daten an einer bestimmten Adresse in einem internen Adressraum der Vorrichtung an eine andere Adresse des internen Adressraums der Vorrichtung zu bewegen.

11. Vorrichtung nach einem der Ansprüche 1 bis 6, **dadurch gekennzeichnet, dass**
die Vorrichtung dazu konfiguriert ist, eine Vorwärtsberechnung eines mehrschichtigen künstlichen neuronalen Netzes durchzuführen, nachdem eine vorherige Schicht des künstlichen neuronalen Netzes durchgeführt wurde, ein Ausgabeneuronenvektor der vorherigen Schicht erhalten wurde, die Master-Operationseinheit (5) dazu konfiguriert ist, den Ausgabeneuronenvektor in der vorherigen Schicht als einen Eingabeneuronenvektor in der aktuellen Schicht zum Durchführen einer Operation eines künstlichen neuronalen Netzes auf der aktuellen Schicht zu verwenden.

12. Verfahren zum Durchführen einer Vorwärtsberechnung eines künstlichen neuronalen Netzes, ausgeführt durch die Vorrichtung nach einem der Ansprüche 1 bis 11, wobei das Verfahren Folgendes umfasst:
Übertragen eines Eingabeneuronenvektors durch eine Master-Operationseinheit (5) an jede Slave-Operationseinheit (6), den Eingabevektors jeweils in einem Cache jeder Slave-Operationseinheit (6) speichert;
Durchführen, durch eine Vielzahl von Slave-Operationseinheiten (6), einer Skalarproduktoperation parallel an dem von der Master-Operationseinheit (5) übertragenen Eingabeneuronenvektor beziehungsweise unterschiedlichen Gewichtsvektoren der entsprechenden Slave-Operationseinheit (6), um Zwischenergebnisse zu erhalten, und dann die Zwischenergebnisse an die Master-Operationseinheit (5) zurückzugeben;
Zusammenfügen, durch eine H-Baum-Einheit (4), der Zwischenergebnisse jeder Slave-Operationseinheit (6) zu einem vollständigen Zwischenergebnisvektor, nachdem die Berechnung der Slave-Operationseinheit (6) abgeschlossen ist; und
Durchführen, durch die Master-Operationseinheit (5), einer Aktivierungsoperation an dem Zwischenergebnisvektor, um einen endgültigen Ausgabeneuronenvektor zu erhalten.

## Revendications

1. Appareil permettant de réaliser un calcul prévisionnel d'un réseau de neurones artificiels, l'appareil comprenant une unité d'opération maîtresse (5), une ou plusieurs unités d'opération esclaves (6) et une unité d'arborescence en H (4) entre l'unité d'opération maîtresse (5) et les unités d'opération esclaves (6),
ladite unité d'opération maîtresse (5) étant configurée pour transmettre un vecteur neurone d'entrée d'une couche dans le réseau de neurones artificiels à chaque unité d'opération esclave (6) ;
ladite unité d'arborescence en H (4) étant configurée pour acheminer le vecteur de neurones d'entrée stocké dans l'unité d'opération maîtresse (5) vers chaque unité d'opération esclave (6) au stade de début de la couche actuelle du réseau de neurones artificiels ;
lesdites multiples unités d'opération esclaves (6) étant configurées pour réaliser une opération de produit scalaire en parallèle sur le vecteur de neurone d'entrée transmis à partir de l'unité d'opération maîtresse (5) et différents vecteurs de poids de l'unité d'opération esclave correspondante (6) respectivement pour obtenir des résultats intermédiaires, et ensuite renvoyer les résultats intermédiaires à l'unité d'opération maîtresse (5) ;
**caractérisé en ce que**
l'unité d'opération maîtresse (5) est en outre configurée pour mettre en antémémoire le vecteur de neurone d'entrée dans une antémémoire de chaque unité d'opération esclave (6),
l'unité d'arborescence en H (4) est configurée pour joindre les résultats intermédiaires de chaque unité d'opération esclave (6) en un vecteur de résultat intermédiaire complet ; et
l'unité d'opération maîtresse (5) est également configurée pour réaliser une opération d'activation sur le vecteur de résultat intermédiaire afin d'obtenir un vecteur de neurone de sortie final ;
l'appareil comprend en outre
une unité d'accès direct à la mémoire (3) configurée pour écrire des données dans des unités de mise en antémémoire correspondantes de l'unité d'opération maîtresse (5) et des unités d'opération esclaves respectives (6) à partir d'un espace d'adresse externe ou lire des données à partir des unités de mise en antémémoire vers l'espace d'adresse externe ;
une unité de mise en antémémoire d'instructions (1) configurée pour lire des instructions par l'intermédiaire de l'unité d'accès direct à la mémoire (3) et mettre en antémémoire les instructions ; et
une unité de commande (2) configurée pour lire des instructions à partir de l'unité de mise en antémémoire d'instructions (1), décoder les instructions en micro-instructions pour commander l'unité d'opération maîtresse (5), les unités d'opération esclaves (6) et l'unité d'accès direct à la mémoire (3).

2. Appareil de la revendication 1, **caractérisé en ce que**,
l'unité d'arborescence en H (4) présente un
structure de l'arborescence en H, l'arborescence en H est un chemin binaire composé de multiples noeuds, et
chaque noeud est configuré pour transmettre les mêmes données d'un noeud en amont à deux noeuds en aval, combiner des données renvoyées par deux noeuds en aval pour obtenir des données combinées, et ensuite transmettre les données combinées au noeud en amont.

3. Appareil de la revendication 1, **caractérisé en ce que** l'unité d'opération maîtresse (5) est également configurée pour réaliser l'une quelconque des opérations suivantes sur le vecteur de résultat intermédiaire :
une opération d'accumulation destinée à ajouter un biais au vecteur de résultat intermédiaire ; et
une opération d'échantillonnage pour comparer le vecteur de résultat intermédiaire et un nombre aléatoire ; et 1 est délivré en sortie lorsque le vecteur de résultat intermédiaire est supérieur au nombre aléatoire, 0 est délivré en sortie lorsque le vecteur de résultat intermédiaire est inférieur au nombre aléatoire ; et
une opération de mise en commun comprenant une mise en commun max ou une mise en commun moyenne.

4. Appareil de l'une quelconque des revendications 1-3, **caractérisé en ce que** l'unité d'opération maîtresse (5) comprend une unité d'opération (51) et une unité de mise en antémémoire de neurones (53),
ladite unité de mise en antémémoire de neurones (53) étant configurée pour mettre en antémémoire le vecteur de neurone d'entrée requis par l'unité d'opération maîtresse (5) et le vecteur de neurone de sortie durant le processus de calcul ; et
ladite unité d'opération (51) étant configurée pour réaliser diverses opérations de l'unité d'opération maîtresse (5), comprenant, mais sans s'y limiter, une opération accumulée pour ajouter un biais, une opération d'activation, une opération de mise en commun, une opération de moyenne et une opération d'échantillonnage.

5. Appareil de la revendication 4, **caractérisé en ce que** l'unité d'opération maîtresse (5) comprend également une unité de détermination de relation de dépendance de données (52) ;
l'unité de détermination de relation de dépendance de données (52) est un port permettant de lire ou d'écrire des données dans l'unité de mise en antémémoire de neurones (53) et configurée pour garantir qu'aucun conflit de cohérence n'existe dans la lecture à partir de l'unité de mise en antémémoire de neurones (53) et l'écriture de données dans l'unité de mise en antémémoire de neurones (53) ; et
l'unité de détermination de relation de dépendance de données (52) est également configurée pour lire le vecteur de neurone d'entrée à partir de l'unité de mise en antémémoire de neurones (53) et transmettre le vecteur de neurone d'entrée aux unités d'opération esclaves (6).

6. Appareil de l'une quelconque des revendications 1-3, **caractérisé en ce que** chaque unité d'opération esclave (6) comprend une unité d'opération (61), une unité de mise en antémémoire de neurones (63) et une unité de mise en antémémoire de poids (64),
ladite unité de mise en antémémoire de neurones (63) étant configurée pour mettre en antémémoire le vecteur de neurone d'entrée et une valeur du neurone de sortie délivré en sortie par l'unité d'opération esclave (6) ;
ladite unité de mise en antémémoire de poids (64) étant configurée pour mettre en antémémoire le vecteur de poids requis par l'unité d'opération esclave (6) durant le processus de calcul, ledit vecteur de poids étant lu à partir d'un espace d'adresse externe par l'intermédiaire d'une unité d'accès direct à la mémoire (3) ; ladite unité de mise en antémémoire de poids (64) de chaque unité d'opération esclave (6) étant configurée pour mettre en antémémoire différents vecteurs de poids ; et
ladite unité d'opération (61) étant configurée pour recevoir des micro-instructions émises par une unité de commande, et lire un vecteur de poids à partir de l'unité de mise en antémémoire de poids (64), lire un vecteur de neurone d'entrée à partir de l'unité de mise en antémémoire de neurones (63), et ensuite réaliser une opération de produit scalaire sur le vecteur de poids et le vecteur de neurone d'entrée selon les micro instructions.

7. Appareil de la revendication 6, **caractérisé en ce que** chaque unité d'opération esclave (6) comprend également une unité de détermination de relation de dépendance de données (62),
ladite unité de détermination de relation de dépendance de données (62) étant configurée pour lire des données ou écrire des données dans l'unité de mise en antémémoire de neurones (63) et l'unité de mise en antémémoire de poids (64) durant le processus de calcul, et garantir qu'aucun conflit de cohérence n'existe dans la lecture de données à partir de l'unité de mise en antémémoire de neurones (63) et de l'unité de mise en antémémoire de poids (64) et l'écriture de données dans l'unité de mise en antémémoire de neurones (63) et l'unité de mise en antémémoire de poids (64).

8. Appareil de la revendication 5 ou 7, **caractérisé en ce que** l'unité de détermination de relation de dépendance de données (52, 62) est configurée pour déterminer si des données liées à une micro-instruction à exécuter dépendent de données liées à une micro-instruction en cours d'exécution ;
si des données liées à une micro-instruction à exécuter ne dépendent pas de données liées à une micro-instruction en cours d'exécution, la micro-instruction à exécuter est émise immédiatement ; et
si des données liées à une micro-instruction à exécuter dépendent de données liées à une micro-instruction en cours d'exécution, la micro-instruction à exécuter est émise une fois que toutes les micro-instructions dépendantes de la micro-instruction à exécuter sont terminées.

9. Appareil de la revendication 8, **caractérisé en ce que** l'unité de détermination de relation de dépendance de données (52, 62) est configurée pour stocker une file d'attente d'instructions,
dans la file d'attente d'instructions, si une plage de données liées à une instruction de lecture est en conflit dans une plage de données liées à une instruction d'écriture au niveau de l'extrémité avant de la file d'attente d'instructions, l'instruction de lecture est émise après que l'instruction d'écriture dont dépend l'instruction de lecture on est exécutée.

10. Appareil de la revendication 1, **caractérisé en ce que** l'instruction comprend une ou plusieurs des suivantes :
une instruction CONFIG utilisée pour configurer diverses constantes requises dans une opération de la couche actuelle avant le début de l'exécution des réseaux de neurones artificiels de chaque couche ;
une instruction COMPUTE configurée pour réaliser un calcul logique arithmétique de réseaux de neurones artificiels de chaque couche ;
une instruction IO configurée pour lire des données d'entrée requises par l'opération à partir d'un espace d'adresse externe et stocker les données dans l'espace d'adresse externe une fois l'opération terminée ;
une instruction NOP configurée pour vider les micro-instructions actuellement chargées dans toute la file d'attente d'antémémoire interne pour les micro-instructions afin de garantir que toutes les instructions avant l'instruction NOP sont toutes exécutées ;
une instruction JUMP configurée pour commander un saut de l'adresse d'instruction suivante à lire par le dispositif de commande à partir de l'unité de mise en antémémoire d'instructions (1), afin de mettre en oeuvre un saut du flux de commande ; et
une instruction MOVE configurée pour déplacer des données à une certaine adresse dans un espace d'adresse interne de l'appareil vers une autre adresse de l'espace d'adresse interne de l'appareil.

11. Appareil de l'une quelconque des revendications 1 à 6, **caractérisé en ce que**
l'appareil est configuré pour réaliser un calcul prévisionnel d'un réseau de neurones artificiels multicouche, après qu'une couche précédente du réseau de neurones artificiels a été réalisée, un vecteur de neurone de sortie de la couche précédente est obtenu, l'unité d'opération maîtresse (5) est configurée pour prendre le vecteur de neurone de sortie dans la couche précédente en tant que vecteur de neurone d'entrée dans la couche actuelle pour réaliser l'opération d'un réseau de neurones artificiels sur la couche actuelle.

12. Procédé de réalisation de calcul prévisionnel d'un réseau de neurones artificiels, exécuté par l'appareil de l'une quelconque des revendications 1 à 11, le procédé comprenant :
la transmission, par une unité d'opération maîtresse (5), d'un vecteur de neurone d'entrée à chaque unité d'opération esclave (6), stocke le vecteur d'entrée dans une antémémoire de chaque unité d'opération esclave (6), respectivement ;
la réalisation, par une pluralité d'unités d'opération esclaves (6), d'une opération de produit scalaire en parallèle sur le vecteur de neurone d'entrée transmis à partir de l'unité d'opération maîtresse (5) et différents vecteurs de poids de l'unité d'opération esclave correspondante (6) respectivement pour obtenir des résultats intermédiaires, et ensuite renvoyer les résultats intermédiaires à l'unité d'opération maîtresse (5) ;
la jonction, au moyen d'une unité d'arborescence en H (4), des résultats intermédiaires de chaque unité d'opération esclave (6) en un vecteur de résultat intermédiaire complet une fois le calcul de l'unité d'opération esclave (6) terminé ; et
la réalisation, par l'unité d'opération maîtresse (5), d'une opération d'activation sur le vecteur de résultat intermédiaire pour obtenir un vecteur de neurone de sortie final.
